# EUROPEAN PATENT SPECIFICATION

(11) **EP 3 391 576 B1**
(45) Date of publication and mention of the grant of the patent: **07.10.2026**
(21) Application number: 16822305.5
(22) Date of filing: 08.12.2016
(51) Int. Cl.: H04L 5/00, H04W 72/04, H04B 7/0452, H04B 7/06, H04W 84/12, H04L 27/26, H04L 25/03

(54) **SYSTEM AND METHOD FOR PROVIDING RESOURCE SIGNALING WITHIN A WRELESS LOCAL AREA NETWORK (WLAN)**
SYSTEM UND VERFAHREN ZUR BEREITSTELLUNG VON RESSOURCENSIGNALISIERUNG INNERHALB EINES DRAHTLOSEN LOKALEN NETZWERKS (WLAN)
SYSTÈME ET PROCÉDÉ POUR FOURNIR UNE SIGNALISATION DE RESSOURCES DANS UN RÉSEAU LOCAL SANS FIL (WLAN)

(30) Priority: 15.12.2015 US 201562267579 P; 07.12.2016 US 201615371895
(43) Date of publication of application: 24.10.2018
(73) Proprietor: Marvell Asia Pte, Ltd., Singapore 369522 (SG)
(72) Inventor: SUN, Yakun, San Jose, CA 95129 (US); ZHANG, Hongyuan, Fremont, CA 94555 (US)
(74) Representative: Grünecker Patent- und Rechtsanwälte PartG mbB
(86) International application number: PCT/US2016/065554
(87) International publication number: WO 2017/105994

(56) References cited:
- US-A1- 2014 307 650
- US-A1- 2014 307 650
- ROBERT STACEY: "IEEE P802.11 - Wireless LANs: Specification Framework for TGax", IEEE 802.11-15/0132R13, 7 December 2015 (2015-12-07), XP055350345, Retrieved from the Internet <URL:https://mentor.ieee.org/802.11/dcn/15/11-15-0132-13-00ax-spec-framework.docx> [retrieved on 20170228]
- LE LIU (HUAWEI): "HE-SIG-B Contents ; 11-15-1335-02-00ax-he-sig-b-contents", IEEE DRAFT; 11-15-1335-02-00AX-HE-SIG-B-CONTENTS, IEEE-SA MENTOR, PISCATAWAY, NJ USA, vol. 802.11ax, no. 2, 10 November 2015 (2015-11-10), pages 1 - 23, XP068099301
- YAKUN SUN (MARVELL): "Spatial Configuration And Signaling for MU-MIMO ; 11-15-1350-00-00ax-spatial-configuration-and-signaling-for-mu-mimo", IEEE DRAFT; 11-15-1350-00-00AX-SPATIAL-CONFIGURATION-AND-SIGNALING-FOR-MU-MIMO, IEEE-SA MENTOR, PISCATAWAY, NJ USA, vol. 802.11ax, 9 November 2015 (2015-11-09), pages 1 - 20, XP068099328
- KATSUO YUNOKI (KDDI R&D LABORATORIES): "Considerations on HE-SIG-A and B ; 11-15-0827-02-00ax-considerations-on-he-sig-a-and-b", IEEE DRAFT; 11-15-0827-02-00AX-CONSIDERATIONS-ON-HE-SIG-A-AND-B, IEEE-SA MENTOR, PISCATAWAY, NJ USA, vol. 802.11ax, no. 2, 15 July 2015 (2015-07-15), pages 1 - 14, XP068098044
- KAUSHIK JOSIAM (SAMSUNG): "HE-SIG-B Mapping and Compression ; 11-15-1315-01-00ax-he-sig-b-mapping-and-compression", IEEE DRAFT; 11-15-1315-01-00AX-HE-SIG-B-MAPPING-AND-COMPRESSION, IEEE-SA MENTOR, PISCATAWAY, NJ USA, vol. 802.11ax, no. 1, 10 November 2015 (2015-11-10), pages 1 - 19, XP068099266
- ROBERT STACEY: "IEEE P802.11 - Wireless LANs: Specification Framework for TGax", IEEE 802.11-15/0132R13, 7 December 2015 (2015-12-07), XP055350345, Retrieved from the Internet <URL:https://mentor.ieee.org/802.11/dcn/15/11-15-0132-13-00ax-spec-framework.docx> [retrieved on 20170228]
- LE LIU (HUAWEI): "HE-SIG-B Contents ; 11-15-1335-02-00ax-he-sig-b-contents", IEEE DRAFT; 11-15-1335-02-00AX-HE-SIG-B-CONTENTS, IEEE-SA MENTOR, PISCATAWAY, NJ USA, vol. 802.11ax, no. 2, 10 November 2015 (2015-11-10), pages 1 - 23, XP068099301
- YAKUN SUN (MARVELL): "Spatial Configuration And Signaling for MU-MIMO ; 11-15-1350-00-00ax-spatial-configuration-and-signaling-for-mu-mimo", IEEE DRAFT; 11-15-1350-00-00AX-SPATIAL-CONFIGURATION-AND-SIGNALING-FOR-MU-MIMO, IEEE-SA MENTOR, PISCATAWAY, NJ USA, vol. 802.11ax, 9 November 2015 (2015-11-09), pages 1 - 20, XP068099328
- KATSUO YUNOKI (KDDI R&D LABORATORIES): "Considerations on HE-SIG-A and B ; 11-15-0827-02-00ax-considerations-on-he-sig-a-and-b", IEEE DRAFT; 11-15-0827-02-00AX-CONSIDERATIONS-ON-HE-SIG-A-AND-B, IEEE-SA MENTOR, PISCATAWAY, NJ USA, vol. 802.11ax, no. 2, 15 July 2015 (2015-07-15), pages 1 - 14, XP068098044
- KAUSHIK JOSIAM (SAMSUNG): "HE-SIG-B Mapping and Compression ; 11-15-1315-01-00ax-he-sig-b-mapping-and-compression", IEEE DRAFT; 11-15-1315-01-00AX-HE-SIG-B-MAPPING-AND-COMPRESSION, IEEE-SA MENTOR, PISCATAWAY, NJ USA, vol. 802.11ax, no. 1, 10 November 2015 (2015-11-10), pages 1 - 19, XP068099266

## Description

### Cross-Reference to Related Application

This disclosure claims the benefit of U.S. Provisional Patent Application No. 62/267,579, filed December 15, 2015.

This disclosure also claims the benefit of U.S. Non-Provisional Patent Application No. 15/371,895, filed December 7, 2016.

### Field of Use

This disclosure relates to a resource signaling mechanism in a wireless data transmission system. For example, the system may include a wireless local area network (WLAN) implementing the IEEE 802.11 standard, which can be used to provide wireless transfer of data in outdoor deployments, outdoor-to-indoor communications, and device-to-device (P2P) networks.

### Background of the Disclosure

The background description provided herein is for the purpose of generally presenting the context of the disclosure. Work of the inventors hereof, to the extent the work is described in this background section, as well as aspects of the description that may not otherwise qualify as prior art at the time of filing, are neither expressly nor impliedly admitted to be prior art against the present disclosure.

When operating in an infrastructure mode, wireless local area networks (WLANs) typically include an access point (AP) and one or more client stations. These WLANs operate in either a unicast mode or a multicast mode. In the unicast mode, the AP transmits information to one client station at a time. In the multicast mode, the same information is concurrently transmitted to a group of client stations. Development of WLAN standards such as the Institute for Electrical and Electronics Engineers (IEEE) 802.11a, 802.11b, 802.11g, and 802.11n standards has improved data throughput by allowing transmissions across frequency bandwidth. In such implementations, a group of client stations can share the same bandwidth for data transmission. For example, the 802.11ax standards adopts orthogonal frequency division multiple access (OFDMA) to support multiple users in the same bandwidth, and each user is scheduled with a resource unit (RU) occupying a number of subcarriers in frequency.

A resource allocation mechanism is needed to allocate the available RU to each client for transmitting data frames to the AP. For example, the AP and/or the client station need to know how much bandwidth out of a channel is allocated to a specific user. Specifically, when a large number of client stations share a transmission channel to transmit with a low-cost AP (e.g., home use), the existing resource allocation signaling mechanism may be inefficient in terms of bandwidth utilization. For example, the existing resource allocation signaling mechanism requires a large amount of resource allocation signaling information transmitted with a data frame. The data bits used for signaling may take up a significant amount of bandwidth, which reduces transmission efficiency and complicates the scheduler.

The non-patent document by Robert Stacey: "IEEE P802.11 - Wireless LANs: Specification Framework for TGax", IEEE 802.11-15/0132r13, 7 December 2015, is a technical report of the IEEE task group TGax providing a specification framework for IEEE P802.11 Wireless LANs. The report provide specification features of different functional blocks in HE PPDU, including MU-MIMO allocation of RU size > 20 MHz where the user-specific subfield is dynamically split between two HE-SIGB content channels (1/2) and the split is decided by the AP (on a per case basis). The report discloses that the RU allocation signalling of these HE-SIG-B signals occupies 8 bits per 20 MHz. Those 8 bits are mapped to the arrangement and number of MU-MIMO allocations, in which 3 bits can be used to indicate the number of MU-MIMO stations. The report discloses an arrangement in which both the number of allocations and the arrangement of the users are defined.

It is the object of the present invention to provide an improved method and system for resource unit signaling within a wireless local area network.

This object is solved by the subject matter of the independent claims.

Embodiments are defined in the dependent claims.

In some implementations, the allowed bandwidth is 20MHz.

In some implementations, when the resource unit is equivalent to a multiple of the allowed bandwidth, a number of the plurality of channels is equivalent to a value of the multiple.

In some implementations, when the resource unit is not equivalent to a multiple of the allowed bandwidth, a number of the plurality of channels is equivalent to an integer value greater than and closest to a value of the resource unit divided by the allowed bandwidth.

In some implementations, the second preamble associated with the corresponding channel is configured with the first number of bits representing the number of users spatially multiplexed on the corresponding channel.

In some implementations, the first number of bits has less bits than the second number of bits.

### Brief Description of the Drawings

Further features of the disclosure, its nature and various advantages will become apparent upon consideration of the following detailed description, taken in conjunction with the accompanying drawings, in which like reference characters refer to like parts throughout, and in which:
FIG. 1 is a block diagram of an example wireless WLAN 100 that the preamble transmission mechanism can be operated within, according to some embodiments described herein;
FIG. 2 provides an example block diagram illustrating an example of resource allocation signaling for an RU larger than 20MHz, according to some embodiments described herein;
FIG. 3 provides an example block diagram illustrating an example of resource allocation signaling for an RU larger than 20MHz with reduced signaling bits, according to some embodiments described herein;
FIG. 4 provides an example logic flow diagram illustrating aspects of preparing and transmitting a data frame with a preamble having reduced signaling bits for RUs larger than 20MHz, according to some embodiments described herein; and
FIG. 5 provides another example logic flow diagram 500 illustrating aspects of transmitting a data frame with a preamble having reduced signaling bits for RUs larger than an allowed bandwidth, according to some embodiments described herein.

### Detailed Description

This disclosure describes methods and systems for providing resource allocation signaling for large resource units (RUs) within an 802.11 (e.g., 802.11ax) wireless network. When the RU is greater than an allowed bandwidth (e.g., 20MHz), a data field with a shorter bit length than the regular RU signaling field may be used. The shorter data field may include data bits to represent the number of STAs spatially multiplexed in this RU. No additional RU signaling bits may be used. In this way, RU signaling requires a smaller number of bits for the data frame and thus the communication efficiency can be improved.

For example, a data frame may include a high efficiency (HE) preamble portion containing a high efficiency (HE) signal field A (SIGA) and an HE signal field B (HE-SIGB). Specifically, the HE-SIGB field is used to indicate the RU signaling for each station, e.g., how much bandwidth of a channel (e.g., 20MHz) is allocated to each client station. To improve efficiency, two HE-SIGB fields may be used for transmission if the bandwidth is larger than or equal to 40MHz. Each HE-SIGB field covers the signaling for half of the bandwidth by default.

In some embodiments, a common block is transmitted within each HE-SIGB to carry the resource allocation signaling. For example, eight bits may be used per 242 tones (20MHz). Therefore, 16 bits may be used in each common block in each HE-SIGB field for 80MHz. For another example, RUs of 242 tones (20MHz), 484 tones (40MHz), 996 tones (80MHz), and 996x2 tones (160MHz) may be used. For an RU larger than 20MHz, RU signaling information may be conveyed by both common blocks of the two HE-SIGB fields. In addition, when the RU is larger than a "basic" bandwidth of 20MHz, the wireless access point (AP) may still choose to do RU scheduling by treating the larger RU as multiple sub-RUs of 20MHz. In this case, the RU signaling by eight bits may be carried by the common block of the HE-SIGB field for each sub-RU of 20MHz, which is an unnecessary overhead. Also, for a downlink (DL) multi-user (MU) multiple-input multiple-output (MIMO) system, the RU signaling may be repeated over each HE-SIGB and thus may take up a significant number of data bits, which may be unnecessary and inefficient.

Some embodiments described herein provide an HE-SIGA and HE-SIGB structure for RU signaling with RUs greater than 20MHz. When an RU is a multiple of 20MHz (e.g., 242/484/996/996×2 tones), the 8-bit RU signaling field in an HE-SIGB field may be replaced by a shorter field representing the number of client STAs multiplexed in this RU. The HE-SIGA field may have a corresponding bit for a respective channel to indicate whether the HE-SIGB associated with the respective channel skips the 8-bit RU signaling field. In this way, in an MU MIMO systems when the HE-SIGB field may be repeatedly transmitted, the RU signaling overhead may be reduced.

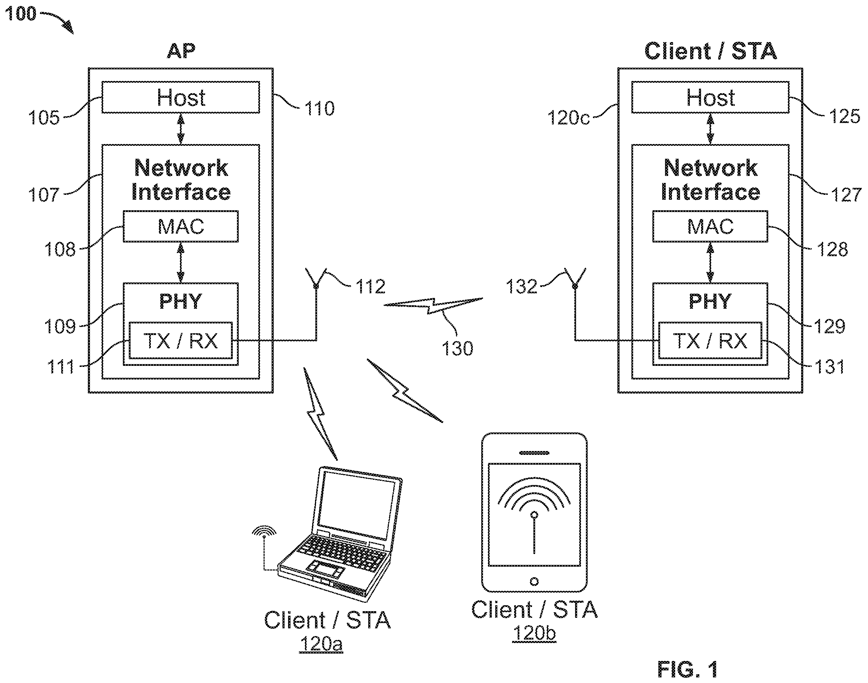

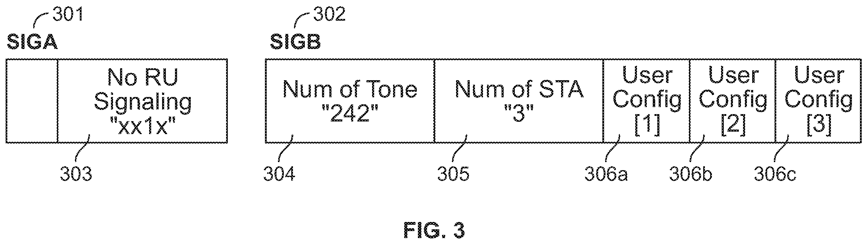

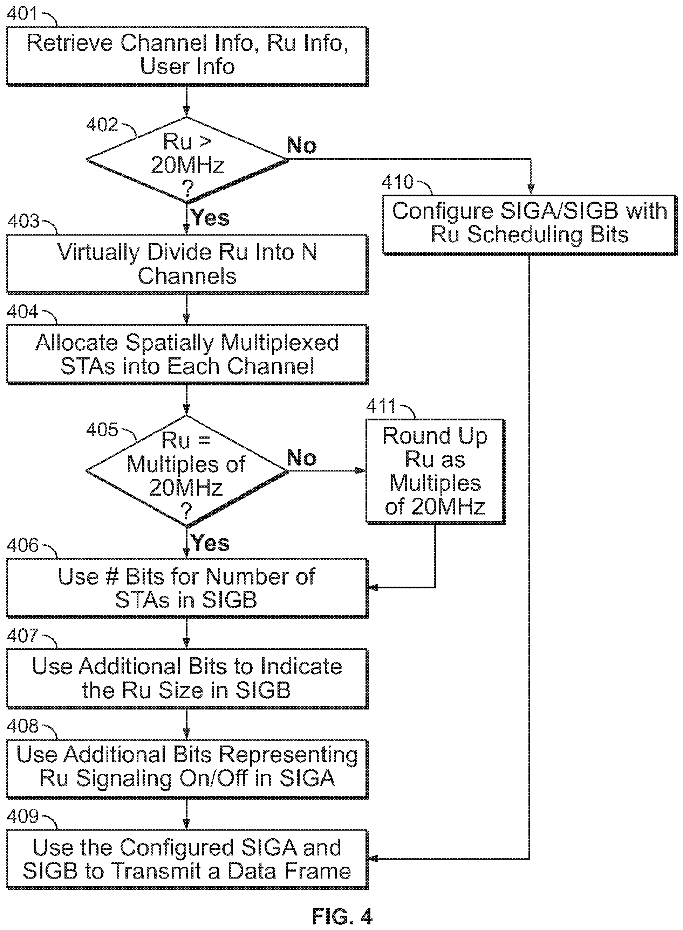

FIG. 1 is a block diagram of an example wireless WLAN 100 that the preamble transmission mechanism can be operated within, according to some embodiments described herein. A wireless AP 110 (access point) includes a host processor 105 (host control circuitry) that may be configured to process or assist in data operation, such as modulation/demodulation, encoding/decoding, encryption/decryption, or the like. For example, the host processor 105 may be configured to prepare and transmit a data frame having a preamble with HE-SIGA and HE-SIGB bits configured as illustrated in FIG. 3, or perform the work flows illustrated in FIG. 4.

A network interface device 107 is coupled to the host processor 105, which is configured to interface with an outer network. The network interface device 107 includes a medium access control (MAC) processing unit 108 and a physical layer (PHY) processing unit 109. The PHY processing unit 109 includes a plurality of transceivers 111, and the transceivers 111 are coupled to a plurality of antennas 112.

The WLAN 100 includes a plurality of client stations 120a-c. Although three client stations 120a-c are illustrated in FIG. 1, the WLAN 100 can include different numbers (e.g., 1, 2, 3, 5, 6, etc.) of client stations 120a-c in various scenarios and embodiments. Each client station, e.g., 120a-c, may have a similar structure as that of an AP 110 (access point). For example, the client station 120c can include a host processor 125 (host control circuitry) coupled to a network interface device 127. The network interface device 127 includes a MAC processing unit 128 and a PHY processing unit 129. The PHY processing unit 129 includes a plurality of transceivers 131, and the transceivers 131 are coupled to a plurality of antennas 132 to receive or transmit data from or to the wireless communication channel.

Two or more of the client stations 120a-c may be configured to receive data such as including an 802.11 data frame 130, which may be transmitted simultaneously by the AP 110 (access point). Additionally, two or more of the client stations 120a-c can be configured to transmit data to the AP 110 (access point) such that the AP 110 receives the data.

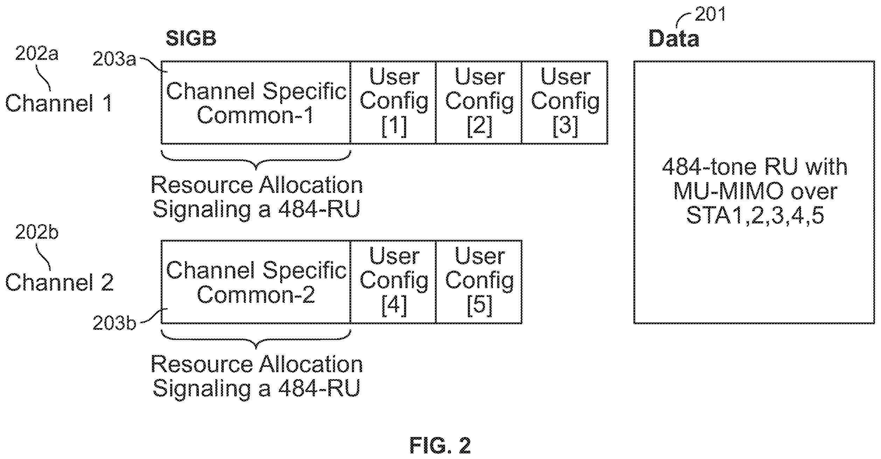

FIG. 2 provides an example block diagram illustrating an example of resource allocation signaling for an RU larger than 20MHz, according to some embodiments described herein.

When an RU larger than 20MHz is allocated (e.g., 484- and 996-tone RU), this RU may be used for MU-MIMO, so multiple STAs are spatially multiplexed over this RU. The large RU can be conceptually viewed as N (*N*>1) 20MHz channels, and then the resource allocation can be performed as allocating multiple available 20MHz channels. For each 20MHz "channel," a resource signaling field indicating a large RU, as well as a subset of RU configuration fields for the STAs scheduled over this large RU may be used.

For example, the spatially multiplexed client stations may be evenly distributed into each "channel". In one implementation, each "channel" may contain a consecutive number of STAs. Alternatively, each channel may contain one STA in a round-robin fashion.

In another implementation, all STAs may be duplicated in each "channel".

In another implementation, the STAs into each "channel" may be dynamically split, and the number of STAs in each "channel" may be reflected in the common field (or a channel-specific common) field, or in SIGA.

For example, as shown in FIG. 2, for an RU that is to carry data at 40MHz (484 tones) with five STAs spatially multiplexed, the RU may be considered as two 20MHz channels 202a-b. User configuration fields for STAs #1, 2, and 3 may be used for RU signaling for the first channel 202a, and the user configuration fields for STAs #4 and 5 may be used for RU signaling for the second 20MHz channel 202b.

When RU signaling field is used, the common block 203a-b, each for the HE-SIGB for channel 202a-b, respectively, may carry the resource allocation signaling information for the 484-tone RU.

FIG. 3 provides an example block diagram illustrating an example of resource allocation signaling for an RU larger than 20MHz with reduced signaling bits, according to some embodiments described herein. A joint RU signaling for the bandwidth may be contained in each SIGB common (or channel-specific common) field. When an RU is a multiple of 20MHz (e.g., 242/484/996/996×2 tones), RU signaling may be replaced by a shorter field to represent the number of STAs spatially multiplexed in this RU, e.g., the number of STAs may be a much shorter number and may need a smaller number of bits to represent. Additional bits may be used to indicate the RU size from 242 tones to 996×2 tones. Additional bits switching from RU signaling on/off may be used. These two subfields of bits can be in either HE-SIGA field or HE-SIGB field.

In some implementations, the HE-SIGA field 301 may have bits to represent that a respective channel has "no RU signaling," and the HE-SIGB field 302 may have bits to represent "number of tone" 304 and "number of STA" 305. The bits to represent "number of tone" 304 and "number of STA" 305 are the common (channel-specific) field for HE-SIGB-1 field and HE-SIGB-2 field.

For example, a 242-tone RU can be scheduled with three STAs multiplexed, as shown in the respective example in FIG. 3. At 303, the bit "1" indicates the corresponding channel (e.g., "XX1X" at 303 indicates the third channel out of the four channels) has a 242-tone or larger RU, and RU signaling is skipped in the HE-SIGB field. The HE-SIGB field 302 may also include bits for user configuration information 306a-c from multiple users.

In an alternative implementation (not shown in FIG. 3), bits representing "no RU signaling" and bits representing "number of tone" can be included in the HE-SIGA field, and the SIGB field only includes bits representing "number of STA". In another implementation, all the bits representing "no RU signaling", "number of tone" and "number of STA" bits may be included in the HE-SIGA field.

The "No RU signaling" subfield 303 can be set as one bit for each channel. Or the subfield 303 can be set as one bit for each SIGB, and when the "No RU signaling" subfield 303 is set, all resource allocation signals may be skipped for every channel covered by the respective HE-SIGA field 301. Alternatively, the "No RU signaling" subfield 303 can be set as one bit for all HE-SIGA fields or HE-SIGB fields (if parallel HE-SIGB fields of channels are used), and when it is set, all resource allocation signaling may be skipped for every channel.

Thus, in the respective example, eight bits for RU signaling may usually be used per 242 tones (20MHz) under the RU signaling method in FIG. 2. But using the signaling method illustrated in FIG. 3, a shorter field with fewer bits is required, e.g., five bits including two bits representing the three client STAs, and three bits representing the RU size (e.g., the number of tones).

The number of users/STAs that can be spatially multiplexed in one RU may also be reduced when the "No RU signaling" subfield 303 (i.e., RU signaling reduction) is used. For example, if at most four users can be spatially multiplexed per RU, two bits for "number of STA" 305 may be used.

It is noted that the RU signaling reduction can be switched on only for an RU of a multiple of 40MHz (e.g., 484/996/996×2 RU). Or alternatively, the RU signaling reduction may only be turned off when the RU is the entire bandwidth, e.g., a 242-tone RU for a 20MHz bandwidth, or a 484-tone RU for a 40MHz bandwidth.

FIG. 4 provides an example logic flow diagram illustrating aspects of preparing and transmitting a data frame with a preamble having reduced signaling bits for RUs larger than 20MHz, according to some embodiments described herein. At 401, channel information (e.g., the total bandwidth for transmission), RU information (e.g., size of the RU, etc.) and user information (e.g., the number of client STAs, etc.) may be obtained, at a wireless transceiver, prior to preparing and transmitting a data frame.

At 402, the wireless transceiver may determine whether the RU is greater than 20MHz. If the RU is a large unit greater than 20MHz, the RU may be virtually divided into N channels, wherein the number N may be further defined at 405 and 411. At 404, spatially multiplexed STAs are allocated into each channel. Or, if the RU is not greater than 20MHz at 402, the HE-SIGA field and the HE-SIGB field may be configured with standard RU scheduling bits for transmission at 410.

At 405, it is determined whether the RU has a size as a multiple of 20MHz, e.g., 40MHz, 60MHz, 80MHz, 160MHz, etc. If the RU is not a multiple of 20MHz, e.g., the RU has a size of 50MHz, 70MHz, etc., at 411, the number of channels N may be a number that is rounded up. For example, for an RU of 50MHz, three channels may be used; for an RU of 70MHz, four channels may be used. At 406, a number of bits may be configured in the HE-SIGB field or the HE-SIGA field to represent the number of STAs of the respective channel. At 407, additional bits may be used to indicate the RU size in the HE-SIGB field. At 408, additional bits may be used to represent whether RU signaling is on or off, e.g., in the HE-SIGA field. At 409, the data frame having the HE-SIGA field and the HE-SIGB field configured at 406-408 may be transmitted.

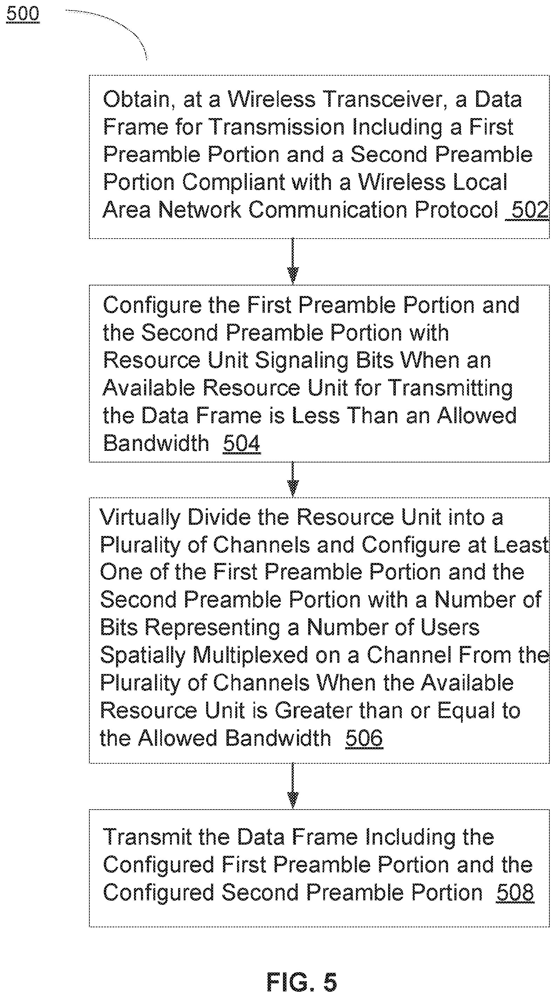

FIG. 5 provides another example logic flow diagram 500 illustrating aspects of transmitting a data frame with a preamble having reduced signaling bits for RUs larger than an allowed bandwidth, according to some embodiments described herein. At 502, a data frame may be obtained at a wireless transceiver for transmission. The data frame may be compliant with a WLAN communication protocol, such as the IEEE 802.11ax standard. The data frame may include a first preamble portion, such as the HE-SIGA field (e.g., see field 301 in FIG. 3), and a second preamble portion such as the HE-SIGB field (e.g., see field 302 in FIG. 3).

At 504, the first preamble portion and the second preamble portion may be configured with resource unit signaling bits when an available RU for transmitting the data frame is less than an allowed bandwidth (e.g., 20MHz).

At 506, when the available RU for transmitting the data frame is greater than or equal to an allowed bandwidth (e.g., 20MHz), the RU may be virtually divided into a plurality of channels of 20MHz. At least one of the first preamble portion and the second preamble portion may be configured with a number of bits representing the number of users spatially multiplexed on the channel.

At 508, the data frame including the configured first preamble portion and the configured second preamble portion may be transmitted.

While this specification contains many specifics, these should not be construed as limitations on the scope of what may be claimed, but, rather, as descriptions of particular implementations of the subject matter. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can, in some cases, be excised from the combination, and the claimed combination may be directed to a subcombination or variation of a subcombination.

While operations are depicted in the drawings in a particular order, this should not be understood as requiring that such operations be performed in the particular order shown or in sequential order, or that all illustrated operations be performed, to achieve the desirable results. In certain circumstances, multitasking and parallel processing may be advantageous. Moreover, the separation of various system components in the aspects described above should not be understood as requiring such separation in all aspects, and it should be understood that the described program components and systems can generally be integrated together in a single software product or packaged into multiple software products.

Suitable computer program code residing on a computer-readable medium may be provided for performing one or more functions in relation to performing the processes as described herein. The term "computer-readable medium" as used herein refers to any non-transitory or transitory medium that provides or participates in providing instructions to a processor of the computing device (e.g., the BLE device 106a-b, the receiving server 105, or any other processor of a device described herein) for execution. Such a medium may take many forms, including but not limited to non-volatile media and volatile media. Nonvolatile media include, for example, optical, magnetic, or opto-magnetic disks, or integrated circuit memory, such as flash memory. Volatile media include dynamic random access memory (DRAM), which typically constitutes the main memory. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM or EEPROM (electronically erasable programmable read-only memory), a FLASH-EEPROM, any other memory chip or cartridge, or any other non-transitory medium from which a computer can read.

The subject matter of this specification has been described in terms of particular aspects, but other aspects can be implemented and are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous. Other variations are within the scope of the following claims.

## Claims

1. A method for providing resource unit signaling with reduced data bits in a wireless local area network, the method comprising:
obtaining, at a wireless transceiver, a data frame for transmission including a high efficiency signal field A, HE-SIGA, and a high efficiency signal field B, HE-SIGB, compliant with a wireless local area network communication protocol;
when an available resource unit for transmitting the data frame is less than an allowed bandwidth of a channel:
configuring the HE-SIGA and the HE-SIGB comprising a resource unit signaling field carrying a resource allocation signaling with resource unit signaling bits;
when the available resource unit is greater than or equal to the allowed bandwidth of the channel;
virtually dividing the resource unit into a plurality of channels;
configuring the HE-SIGB by replacing the resource unit signaling field carrying the resource allocation signaling in the HE-SIGB by a shorter field representing a resource unit size, including the number of tones, and/or representing a number of client stations spatially multiplexed on a channel from the plurality of channels and/or multiplexed in the resource unit; and
configuring the HE-SIGA to have a corresponding bit for the channel to indicate that the HE-SIGB associated with the channel skips the resource unit signaling field carrying the resource allocation signaling; and
transmitting the data frame including the configured HE-SIGA and the configured HE-SIGB.

2. The method of claim 1, wherein the allowed bandwidth of the channel is 20MHz.

3. The method of claim 1, wherein when the resource unit is equivalent to a multiple of the allowed bandwidth of the channel, a number of the plurality of channels is equivalent to a value of the multiple.

4. The method of claim 1, wherein when the resource unit is not equivalent to a multiple of the allowed bandwidth of the channel, a number of the plurality of channels is equivalent to an integer value greater than and closest to a value of the resource unit divided by the allowed bandwidth of the channel.

5. A system for providing resource unit signaling with reduced data bits in a wireless local area network, the system comprising:
a wireless transceiver configured to obtain a data frame for transmission including a high efficiency signal field A, HE-SIGA, and a high efficiency signal field B, HE-SIGB, compliant with a wireless local area network communication protocol; and
control circuitry configured to:
when an available resource unit for transmitting the data frame is less than an allowed bandwidth of a channel:
configure the HE-SIGA and the HE-SIGB comprising a resource unit signaling field carrying a resource allocation signaling with resource unit signaling bits;
when the available resource unit is greater than or equal to the allowed bandwidth: of the channel;
virtually divide the resource unit into a plurality of channels;
configure the HE-SIGB by replacing the resource unit signaling field carrying the resource allocation signaling in the HE-SIGB by a shorter field representing a resource unit size, including the number of tones, and/or representing a number of client stations spatially multiplexed on a channel from the plurality of channels and/or multiplexed in the resource unit; and
configure the HE-SIGA to have a corresponding bit for the channel to indicate that the HE-SIGB associated with the channel skips the resource unit signaling field carrying the resource allocation signaling,
wherein the data frame including the configured HE-SIGA and the configured HE-SIGA is transmitted by the wireless transceiver to a wireless channel.

6. The system of claim 5, wherein the allowed bandwidth of the channel is 20M Hz.

7. The system of claim 5 or 6, wherein when the resource unit is equivalent to a multiple of the allowed bandwidth of the channel, a number of the plurality of channels is equivalent to a value of the multiple.

8. The system of claim 5, wherein when the resource unit is not equivalent to a multiple of the allowed bandwidth of the channel, a number of the plurality of channels is equivalent to an integer value greater than and closest to a value of the resource unit divided by the allowed bandwidth of the channel.

## Patentansprüche

1. Verfahren zum Bereitstellen einer Ressourceneinheitensignalisierung mit reduzierten Datenbits in einem drahtlosen Local Area Network, wobei das Verfahren umfasst:
Erhalten eines Datenframes zum Senden an einem Drahtlos-Sender/Empfänger, umfassend ein High Efficiency Signal Field A (HE-SIGA) und ein High Efficiency Signal Field B (HE-SIGB), die mit einem Drahtlos-Local-Area-Network-Kommunikationsprotokoll übereinstimmen;
wenn eine verfügbare Ressourceneinheit zum Senden des Datenframes kleiner ist als eine zulässige Bandbreite eines Kanals:
Konfigurieren des HE-SIGA und des HE-SIGB, umfassend ein Ressourceneinheit-Signalisierungsfeld, das eine Ressourcenzuordnungssignalisierung mit Ressourceneinheit-Signalisierungsbits überträgt;
wenn die verfügbare Ressourceneinheit größer gleich der zulässigen Bandbreite des Kanals ist:
virtuelles Unterteilen der Ressourceneinheit in eine Vielzahl von Kanälen;
Konfigurieren des HE-SIGB durch Ersetzen des Ressourceneinheit-Signalisierungsfeldes, das die Ressourcenzuordnungssignalisierung im HE-SIGB überträgt, durch ein kürzeres Feld, das eine Ressourceneinheitengröße, umfassend die Anzahl von Tönen, darstellt und/oder eine Zahl von Clientstationen darstellt, die räumlich auf einem Kanal aus der Vielzahl von Kanälen gemultiplext und/oder in der Ressourceneinheit gemultiplext sind; und
Konfigurieren des HE-SIGA derart, dass es ein entsprechendes Bit für den Kanal aufweist, um anzugeben, dass der mit dem Kanal verbundene HE-SIGB das Ressourceneinheit-Signalisierungsfeld überspringt, das die Ressourcenzuordnungssignalisierung überträgt; und
Senden des Datenframes, umfassend das konfigurierte HE-SIGA und das konfigurierte HE-SIGB.

2. Verfahren nach Anspruch 1, wobei die zulässige Bandbreite des Kanals 20 MHz beträgt.

3. Verfahren nach Anspruch 1, wobei, wenn die Ressourceneinheit einem Vielfachen der zulässigen Bandbreite des Kanals entspricht, eine Zahl der Vielzahl von Kanälen einem Wert des Vielfachen entspricht.

4. Verfahren nach Anspruch 1, wobei, wenn die Ressourceneinheit nicht einem Vielfachen der zulässigen Bandbreite des Kanals entspricht, eine Zahl der Vielzahl von Kanälen einem Ganzzahlwert größer als ein oder am nächsten zu einem Wert der Ressourceneinheit, geteilt durch die zulässige Bandbreite des Kanals, entspricht.

5. System zum Bereitstellen einer Ressourceneinheitensignalisierung mit reduzierten Datenbits in einem drahtlosen Local Area Network, wobei das System umfasst:
einen Drahtlos-Sender/Empfänger zum Erhalten eines Datenframes zum Senden, umfassend ein High Efficiency Signal Field A (HE-SIGA) und ein High Efficiency Signal Field B (HE-SIGB), die mit einem Drahtlos-Local-Area-Network-Kommunikationsprotokoll übereinstimmen; und
eine Steuerschaltung, ausgebildet zum:
wenn eine verfügbare Ressourceneinheit zum Senden des Datenframes kleiner ist als eine zulässige Bandbreite eines Kanals:
Konfigurieren des HE-SIGA und des HE-SIGB, umfassend ein Ressourceneinheit-Signalisierungsfeld, das eine Ressourcenzuordnungssignalisierung mit Ressourceneinheit-Signalisierungsbits überträgt;
wenn die verfügbare Ressourceneinheit größer gleich der zulässigen Bandbreite des Kanals ist:
virtuelles Unterteilen der Ressourceneinheit in eine Vielzahl von Kanälen;
Konfigurieren des HE-SIGB durch Ersetzen des Ressourceneinheit-Signalisierungsfeldes, das die Ressourcenzuordnungssignalisierung im HE-SIGB überträgt, durch ein kürzeres Feld, das eine Ressourceneinheitengröße, umfassend die Anzahl von Tönen, darstellt und/oder eine Zahl von Clientstationen darstellt, die räumlich auf einem Kanal aus der Vielzahl von Kanälen gemultiplext und/oder in der Ressourceneinheit gemultiplext sind; und
Konfigurieren des HE-SIGA derart, dass es ein entsprechendes Bit für den Kanal aufweist, um anzugeben, dass der mit dem Kanal verbundene HE-SIGB das Ressourceneinheit-Signalisierungsfeld überspringt, das die Ressourcenzuordnungssignalisierung überträgt,
wobei der Datenframe, umfassend das konfigurierte HE-SIGA und das konfigurierte HE-SIGA, vom Drahtlos-Sender/Empfänger an einen Drahtloskanal gesendet wird.

6. System nach Anspruch 5, wobei die zulässige Bandbreite des Kanals 20 MHz beträgt.

7. System nach Anspruch 5 oder 6, wobei, wenn die Ressourceneinheit einem Vielfachen der zulässigen Bandbreite des Kanals entspricht, eine Zahl der Vielzahl von Kanälen einem Wert des Vielfachen entspricht.

8. System nach Anspruch 5, wobei, wenn die Ressourceneinheit nicht einem Vielfachen der zulässigen Bandbreite des Kanals entspricht, eine Zahl der Vielzahl von Kanälen einem Ganzzahlwert größer als ein oder am nächsten zu einem Wert der Ressourceneinheit, geteilt durch die zulässige Bandbreite des Kanals, entspricht.

## Revendications

1. Procédé destiné à fournir une signalisation d'unité de ressource avec un nombre réduit de bits de données dans un réseau local sans fil, le procédé comprenant :
l'obtention, par un émetteur-récepteur sans fil, d'une trame de données à transmettre incluant un champ de signal à haute efficience A, HE-SIGA, et un champ de signal à haute efficience B, HE-SIGB, conforme à un protocole de communication de réseau local sans fil ;
quand l'unité de ressource disponible pour la transmission de la trame de données est inférieure à une bande passante autorisée de canal :
la configuration du HE-SIGA et du HE-SIGB comprenant un champ de signalisation d'unité de ressource transportant une signalisation d'attribution de ressources avec des bits de signalisation d'unité de ressource ;
quand l'unité de ressource disponible est supérieure ou égale à la bande passante autorisée du canal :
la division virtuelle de l'unité de ressource en une pluralité de canaux ;
la configuration du HE-SIGB en remplaçant le champ de signalisation d'unité de ressource transportant la signalisation d'attribution de ressources dans le HE-SIGB par un champ plus court représentant une taille d'unité de ressource, incluant le nombre de tonalités, et/ou représentant un nombre de stations clientes multiplexées spatialement sur un canal parmi la pluralité de canaux et/ou multiplexées dans l'unité de ressource ; et
la configuration du HE-SIGA pour qu'il comporte un bit correspondant au canal afin d'indiquer que le HE-SIGB associé au canal omet le champ de signalisation d'unité de ressource transportant la signalisation d'attribution de ressources ; et
la transmission de la trame de données incluant le HE-SIGA configuré et le HE-SIGB configuré.

2. Procédé selon la revendication 1, dans lequel la bande passante autorisée du canal est de 20 MHz.

3. Procédé selon la revendication 1, dans lequel, quand l'unité de ressource est équivalente à un multiple de la bande passante autorisée du canal, le nombre de canaux de la pluralité de canaux est équivalent à une valeur du multiple.

4. Procédé selon la revendication 1, dans lequel, quand l'unité de ressource n'est pas équivalente à un multiple de la bande passante autorisée du canal, le nombre de canaux de la pluralité de canaux est équivalent à une valeur entière supérieure et la plus proche d'une valeur de l'unité de ressource divisée par la bande passante autorisée du canal.

5. Système destiné à fournir une signalisation d'unité de ressource avec un nombre réduit de bits de données dans un réseau local sans fil, le système comprenant :
un émetteur-récepteur sans fil configuré pour obtenir une trame de données à transmettre incluant un champ de signal à haute efficience A, HE-SIGA, et un champ de signal à haute efficience B, HE-SIGB, conforme à un protocole de communication de réseau local sans fil ; et
une circuiterie de commande configurée pour :
quand l'unité de ressource disponible pour la transmission de la trame de données est inférieure à une bande passante autorisée de canal :
configurer le HE-SIGA et le HE-SIGB comprenant un champ de signalisation d'unité de ressource transportant une signalisation d'attribution de ressources avec des bits de signalisation d'unité de ressource ;
quand l'unité de ressource disponible est supérieure ou égale à la bande passante autorisée du canal :
diviser virtuellement l'unité de ressource en une pluralité de canaux ;
configurer le HE-SIGB en remplaçant le champ de signalisation d'unité de ressource transportant la signalisation d'attribution de ressources dans le HE-SIGB par un champ plus court représentant une taille d'unité de ressource, incluant le nombre de tonalités, et/ou représentant un nombre de stations clientes multiplexées spatialement sur un canal parmi la pluralité de canaux et/ou multiplexées dans l'unité de ressource ; et configurer le HE-SIGA pour qu'il comporte un bit correspondant au canal afin d'indiquer que le HE-SIGB associé au canal omet le champ de signalisation d'unité de ressource transportant la signalisation d'attribution de ressources,
dans lequel la trame de données incluant le HE-SIGA configuré et le HE-SIGB configuré est transmise par l'émetteur-récepteur sans fil à un canal sans fil.

6. Système selon la revendication 5, dans lequel la bande passante autorisée du canal est de 20 MHz.

7. Système selon la revendication 5 ou 6, dans lequel, quand l'unité de ressource est équivalente à un multiple de la bande passante autorisée du canal, le nombre de canaux de la pluralité de canaux est équivalent à une valeur du multiple.

8. Système selon la revendication 5, dans lequel, quand l'unité de ressource n'est pas équivalente à un multiple de la bande passante autorisée du canal, le nombre de canaux de la pluralité de canaux est équivalent à une valeur entière supérieure et la plus proche d'une valeur de l'unité de ressource divisée par la bande passante autorisée du canal.
